# EUROPÄISCHE PATENTANMELDUNG

(11) **EP 4 497 536 A1**
(43) Veröffentlichungstag der Anmeldung: **29.01.2025**
(21) Anmeldenummer: 24191117.1
(22) Anmeldetag: 26.07.2024
(51) Int. Cl.: B23Q 7/04, B23Q 7/05, B23Q 7/16, B23Q 7/18, B23Q 16/00, B25J 9/00

(54) **ZUFÜHREINHEIT, BEARBEITUNGSMASCHINE UND VERFAHREN ZUM ZUFÜHREN EINES WERKSTÜCKS**

(30) Priorität: 27.07.2023 DE 102023119967
(71) Anmelder: HOMAG GmbH, 72296 Schopfloch (DE)
(72) Erfinder: Kirn, Christoph, 72270 Baiersbronn (DE); Beilharz, Eckhard, 72270 Baiersbronn (DE); Wendler, Marco, 71131 Jettingen (DE)
(74) Vertreter: Hoffmann Eitle

(57) **Zusammenfassung**

Die Erfindung betrifft eine Zuführeinheit (17) zum Zuführen eines Werkstücks (11), das bevorzugt zumindest abschnittsweise aus Holz, Holzwerkstoff, Kunststoff oder dergleichen besteht, zu einer Bearbeitungsmaschine (10), umfassend eine Werkstückauflage (18), insbesondere eine Luftkisseneinrichtung, Kugelrolleneinrichtung, Rollenbahn oder Rollenleiste, die eingerichtet ist, eine Bewegung eines darauf aufliegenden Werkstücks (11) zu gestatten, und wenigstens einen Manipulator (19), der eingerichtet ist, durch eine Stellbewegung das auf der Werkstückauflage (18) aufliegende Werkstück (11) einer Zuführeinrichtung (20) der Bearbeitungsmaschine (10) zuzuführen, sowie eine Bearbeitungsmaschine (10) und ein Verfahren zum Zuführen eines Werkstücks (11) zu einer Bearbeitungsmaschine (10).

## Beschreibung

### Technisches Gebiet

Die Erfindung betrifft eine Zuführeinheit zum Zuführen eines Werkstücks zu einer Bearbeitungsmaschine, eine Bearbeitungsmaschine zum Bearbeiten eines Werkstücks sowie ein Verfahren zum Zuführen eines Werkstücks zu einer Bearbeitungsmaschine.

### Stand der Technik

Zum Bearbeiten von Werkstücken mit einer Bearbeitungsmaschine, beispielsweise einer Holzbearbeitungsmaschine, ist ein stetiges Zuführen und Positionieren von Werkstücken in einem Arbeitsbereich der Bearbeitungsmaschine erforderlich. Der Automatisierungsgrad solcher Bearbeitungsmaschinen korreliert dabei zumeist mit der Anlagengröße, so dass insbesondere bei kleineren Anlagen das Zuführen und/oder Positionieren der Werkstücke maßgeblich durch einen Maschinenbediener erfolgt. Der Automatisierungsgrad komplexer Bearbeitungsmaschinen lässt sich aus technischer und wirtschaftlicher Sicht jedoch nicht immer auf kleinere Anlagengrößen übertragen. Vielmehr erfordern diese einen individuell angepassten Automatisierungsgrad und/oder eine entsprechende Modularität, um flexibel an die Arbeitsumgebung kleiner und mittlerer Unternehmen anpassbar zu sein.

Um einem Menschen bei einem Arbeitsvorgang eine unterstützende Handhabung und verbesserte Ergonomie bereitzustellen, offenbart die DE 10 2020 108 513 B4 eine Mensch-Roboter-Kollaborationsanlage, die in einem gemeinsamen Arbeitsbereich eine Zusammenarbeit eines Menschen mit einem motorisch angetriebenen Roboter ermöglicht. Hierbei sind die Arme und/oder Hände des Menschen mit dem Roboter koppelbar, so dass Bewegungen der Arme und/oder Hände zum Ausführen des Arbeitsvorgangs durch eine entsprechende Steuerung des motorisch angetriebenen Roboters unterstützt werden. Auf diese Weise kann der Mensch bei einer körperlichen Tätigkeit einer reduzierten Arbeitsbelastung ausgesetzt sein.

### Darstellung der Erfindung

Der Erfindung liegt die Aufgabe zugrunde, eine Zuführeinheit zum Zuführen eines Werkstücks zu einer Bearbeitungsmaschine, eine Bearbeitungsmaschine sowie ein Verfahren zum Zuführen eines Werkstücks zu einer Bearbeitungsmaschine bereitzustellen, durch welche eine sichere und präzise Zuführung eines Werkstücks zu der Bearbeitungsmaschine sowie eine verbesserte Ergonomie und Handhabung für einen Maschinenbediener erreicht ist.

Diese Aufgaben werden durch die Zuführeinheit gemäß Anspruch 1, die Bearbeitungsmaschine gemäß Anspruch 12 und das Verfahren gemäß Anspruch 13 gelöst. Vorteilhafte Weiterbildungen der Erfindung ergeben sich aus den jeweiligen abhängigen Ansprüchen.

Vor diesem Hintergrund ist erfindungsgemäß vorgesehen, dass eine gattungsgemäße Zuführeinheit zum Zuführen eines Werkstücks, das bevorzugt zumindest abschnittsweise aus Holz, Holzwerkstoff, Kunststoff oder dergleichen besteht, zu einer Bearbeitungsmaschine, eine Werkstückauflage umfasst, insbesondere eine Luftkisseneinrichtung, Kugelrolleneinrichtung, Rollenbahn oder Rollenleiste, die eingerichtet ist, eine Bewegung eines darauf aufliegenden Werkstücks zu gestatten, und wenigstens einen Manipulator, der eingerichtet ist, durch eine Stellbewegung das auf der Werkstückauflage aufliegende Werkstück einer Zuführeinrichtung der Bearbeitungsmaschine zuzuführen

Ein Vorteil der erfindungsgemäßen Zuführeinheit besteht darin, dass das auf der Werkstückauflage aufliegende Werkstück insbesondere reibungsminimiert, d.h. mit einem sehr geringen Kraftaufwand, bewegt werden kann, um dieses der Zuführeinrichtung der Bearbeitungsmaschine zuzuführen. Dadurch, dass die Werkstückauflage vorteilhaft als Luftkisseneinrichtung, Kugelrolleneinrichtung, Rollenbahn oder Rollenleiste ausgebildet ist, kann das Werkstück eine nahezu reibungsfreie Bewegung beziehungsweise Verschiebung auf der Werkstückauflage ausführen. Die Werkstückauflage kann dabei eine beliebig gestaltete Auflagefläche für das Werkstück bilden, insbesondere eine sich in einer X-Y-Ebene erstreckende Auflagefläche, beispielsweise in Form einer rechteckigen, L-förmigen, U-förmigen oder dergleichen ausgebildeten Auflagefläche. Ebenso kann vorgesehen sein, dass die Werkstückauflage durch mehrere zueinander angeordnete Werkstückauflagen ausgebildet ist, wodurch diese individuell an eine Arbeitsumgebung der Bearbeitungsmaschine angepasst sein kann.

Durch den Manipulator ist vorzugsweise eine Stellbewegung ausführbar, durch welche eine bevorzugt freie Bewegung des auf der Werkstückauflage aufliegenden Werkstücks steuerbar ist. Vorzugsweise bildet der Manipulator eine kinematische Einrichtung, die mehrere Bewegungsachsen bzw. Freiheitsgrade aufweist. Insbesondere handelt es sich bei dem Manipulator um eine steuerbare Handhabungseinrichtung, beispielsweise einen Roboter oder eine Mensch-Roboter-Kollaborationseinrichtung. Eine solche Mensch-Roboter-Kollaborationseinrichtung wird auch als ein so genannter Cobot bezeichnet. Insbesondere der als Mensch-Roboter-Kollaborationseinrichtung ausgebildete Manipulator ist dazu vorgesehen, einen Maschinenbediener bei der Handhabung des Werkstücks auf der Werkstückauflage, insbesondere beim Zuführen des Werkstücks zur Zuführeinrichtung, zu unterstützen. Vorteilhaft ist der Manipulator eingerichtet eine programmgesteuerte oder eine kraft- und/oder drehmomentgesteuerte Stellbewegung zum Zuführen des Werkstücks zur Zuführeinrichtung auszuführen. Vorteilhaft kann der Manipulator eine Sensoreinrichtung aufweisen, um eine Kraft- und/oder Drehmomenteinwirkung auf den Manipulator zu erfassen und auf dessen Grundlage die programmgesteuerte oder kraft- und/oder drehmomentgesteuerte Stellbewegung steuerbar sein kann. Der Manipulator kann an einer beliebigen Position angeordnet sein, die geeignet ist, das Werkstück auf der Werkstückauflage zu bewegen. Beispielsweise kann der Manipulator sowohl benachbart zur Bearbeitungsmaschine angeordnet sein als auch an der Bearbeitungsmaschine und/oder der Werkstückauflage angebracht sein oder integral mit der Bearbeitungsmaschine und/oder der Werkstückauflage ausgebildet sein.

In einer Weiterbildung der Zuführeinheit kann durch den wenigstens einen Manipulator eine mehrachsige Stellbewegung ausführbar sein und bevorzugt das Werkstück durch den Manipulator auf der Werkstückauflage aufliegend frei bewegbar sein.

Indem die Werkstückauflage insbesondere als Luftkisseneinrichtung, Kugelrolleneinrichtung, Rollenbahn oder Rollenleiste ausgebildet ist, ermöglicht diese eine freie Bewegung des Werkstücks in der X-Y-Ebene der Werkstückauflage. Eine solche Werkstückauflage kann zudem eine freie Drehbewegung des auf der Werkstückauflage aufliegenden Werkstücks ermöglichen, d.h. um eine beliebige Drehachse senkrecht zur X-Y-Ebene der Werkstückauflage. Dabei ist insbesondere vorgesehen, dass das Werkstück während der Bewegung durch den Manipulator auf der Werkstückauflage aufliegt. Mit anderen Worten, der Manipulator führt mit dem auf der Werkstückauflage aufliegenden Werkstück keine vertikale Hubbewegung von der Werkstückauflage weg (d.h. in einer Z-Richtung senkrecht zur X-Y-Ebene) aus.

Eine weitere Ausgestaltung der Zuführeinheit kann vorsehen, dass der wenigstens eine Manipulator eine Greifeinheit zum Angreifen an wenigstens einer Werkstückfläche, bevorzugt Oberseite, des Werkstücks aufweist.

Insbesondere kann die Greifeinheit als eine Vakuum-Greifeinheit und/oder Haftreibungs-Greifeinheit zum Angreifen an wenigstens einer Werkstückfläche, bevorzugt an einer Oberseite des Werkstücks, ausgebildet sein. Bevorzugt bildet die Greifeinheit einen Endeffektor des Manipulators. Die Haftreibungs-Greifeinheit kann dabei beispielsweise ein Flächenelement mit einem hohen Haftreibungskoeffizient aufweisen, welches mit einer definierten Andruckkraft rutschfest an die Werkstückfläche, insbesondere an die Oberseite des Werkstücks, angesetzt wird, um das Werkstück auf der Werkstückauflage zu bewegen. Alternativ kann die Greifeinheit ebenso als eine beliebige andere Einrichtung zum Angreifen an dem Werkstück ausgestaltet sein, um dieses auf der Werkstückauflage zu bewegen, beispielsweise als ein Backengreifer oder dergleichen.

In einer besonders bevorzugten Weiterbildung der Zuführeinheit kann der Werkstückauflage eine Ausrichteinheit zugeordnet sein, und der Manipulator kann eingerichtet sein, das Werkstück durch eine zur Ausrichteinheit gerichteten Stellbewegung an der Ausrichteinheit auszurichten.

Zum Ausrichten des Werkstücks an der Ausrichteinheit ist insbesondere vorgesehen, dass das Werkstück durch den Manipulator mit einer zur Ausrichteinheit gerichteten Stellbewegung an eine Anschlagfläche der Ausrichteinheit gedrückt wird. Mit einer definierten Andruckkraft wird das Werkstück durch den Manipulator gegen die Anschlagfläche der Ausrichteinheit gedrückt und dadurch in eine definierte Orientierung zum Zuführen des Werkstücks zur Bearbeitungsmaschine ausgerichtet.

In einer vorteilhaften Weiterbildung der Zuführeinheit kann der Manipulator eine Dreheinrichtung aufweisen, durch die eine Verdrehung zumindest der Greifeinheit relativ zum Manipulator gestattet ist und mittels welcher das Werkstück durch eine Verdrehung an der Ausrichteinheit ausrichtbar ist.

Die Dreheinrichtung ist vorzugsweise durch ein Drehgelenk zwischen der Greifeinheit und dem Manipulator ausgebildet. D.h. die Dreheinrichtung gestattet eine relative Verdrehung des Endeffektors zum Roboterarm oder Cobotarm. Insbesondere gestattet die Dreheinrichtung eine Verdrehung des durch die Greifeinheit gegriffenen Werkstücks um die Z-Achse (Z-Achse ist senkrecht zur X-Y-Ebene der Werkstückauflage). Bevorzugt ermöglicht die Dreheinrichtung eine freie Drehbewegung, d.h. eine nicht angetriebene Drehbewegung. Die Dreheinrichtung ist vorzugsweise eingerichtet, die Verdrehung der Greifeinheit relativ zum Manipulator in einem begrenzten Winkelbereich zu gestatten. Beispielsweise kann die Dreheinrichtung die Verdrehung der Greifeinheit in einem Winkelbereich von 180° oder weniger, bevorzugt 135° oder weniger, besonders bevorzugt 90° oder weniger, relativ zum Manipulator gestatten.

Eine weitere vorteilhafte Ausgestaltung der Zuführeinheit kann vorsehen, dass der Manipulator eingerichtet ist, das Werkstück in einer Ausrichtrichtung relativ zur Ausrichteinheit zu bewegen und der Zuführeinrichtung der Bearbeitungsmaschine zuzuführen.

Durch das Ausführen der Stellbewegung des Manipulators in der Ausrichtrichtung kann das Werkstück in der entsprechend ausgerichteten Orientierung zum Zuführen des Werkstücks der Zuführeinrichtung der Bearbeitungsmaschine zugeführt und an diese übergeben werden, um in einen Arbeitsbereich der Bearbeitungsmaschine transportiert zu werden. Vorzugsweise ist die Zuführeinrichtung als eine Klemmeinrichtung ausgebildet, beispielsweise als ein Oberdruck- und/oder Unterdruckriemen, durch welche das Werkstück zum Zuführen zur Bearbeitungsmaschine fixierbar ist. Dabei ist vorteilhaft vorgesehen, dass eine Geschwindigkeit der Ausrichtbewegung durch den Manipulator und eine Geschwindigkeit der Transportbewegung der Zuführeinrichtung miteinander synchronisierbar sind. Bevorzugt kann eine Steuereinheit, z.B. der Bearbeitungsmaschine, eingerichtet sein, die Geschwindigkeit der Ausrichtbewegung durch den Manipulator und die Geschwindigkeit der Transportbewegung der Zuführeinrichtung miteinander zu synchronisieren.

In einer Weiterbildung der Zuführeinheit kann der Manipulator eine kraftgeregelte und/oder drehmomentgeregelte Bewegungssteuerung aufweisen, durch die das Werkstück mit einer definierten Andruckkraft an der Ausrichteinheit ausrichtbar ist.

Zur kraftgeregelten und/oder drehmomentgeregelten Bewegungssteuerung kann der Manipulator eine Sensoreinheit, beispielsweise einen Kraft- und/oder Drehmomentsensor, aufweisen, durch dessen Erfassungsergebnis die Stellbewegung des Manipulators steuerbar ist. Durch eine solche Bewegungssteuerung kann insbesondere vorgesehen sein, dass das Werkstück mit einer solchen Andruckkraft an der Ausrichteinheit ausrichtbar ist, dass zum einen eine sichere Ausrichtung des Werkstücks an der Ausrichteinheit erreicht ist und zum anderen keine Beschädigungen an empfindlichen Werkstückoberflächen durch die Ausrichteinheit erfolgen.

Eine besonders bevorzugte Weiterbildung der Zuführeinheit kann zudem vorsehen, dass die Ausrichteinheit eine Sensoreinrichtung aufweist, durch die eine Andruckkraft des Werkstücks an die Ausrichteinheit erfassbar ist, wobei der Manipulator in Abhängigkeit von einem Erfassungsergebnis der Sensoreinrichtung steuerbar ist.

Vorzugsweise kann die Sensoreinrichtung zum Erfassen der Andruckkraft des Werkstücks an die Ausrichteinheit durch wenigstens einen Kraftsensor ausgebildet sein, der in der Ausrichteinheit, insbesondere in einer Anschlagfläche der Ausrichteinheit, integriert ist. Die Anschlagfläche der Ausrichteinheit kann beispielsweise ein Einlauflineal zum Ausrichten und Zuführen des Werkstücks zur Bearbeitungsmaschine bilden. Insbesondere ist die Stellbewegung des Manipulators zum Ausrichten des Werkstücks an der Ausrichteinheit in Abhängigkeit von dem Erfassungsergebnis der Sensoreinrichtung steuerbar.

Zudem kann gemäß einer Weiterbildung der Zuführeinheit die Ausrichteinheit eine Drucklufteinrichtung mit wenigstens einem Luftaustritt an der Ausrichteinheit aufweisen, wobei die Drucklufteinrichtung zumindest einen Drucksensor umfasst und der Manipulator in Abhängigkeit von einem Erfassungsergebnis des Drucksensors steuerbar ist.

Der wenigstens eine Lauftaustritt der Drucklufteinrichtung ist vorzugsweise an der Anschlagfläche der Ausrichteinheit, insbesondere am Einlauflineal, ausgebildet. Durch die Drucklufteinrichtung kann eine Staudrucküberwachung erfolgen, durch welche eine zumindest temporäre Druckänderung, insbesondere ein Druckanstieg, in der Drucklufteinrichtung aufgrund des Anliegens des Werkstücks an der Anschlagfläche und dem dadurch erfolgenden Verschließen des wenigstens einen Luftaustritts erfasst werden kann. Hierfür ist der zumindest eine Drucksensor in einer Zuluftleitung der Drucklufteinrichtung angeordnet. Auf diese Weise kann anhand der Druckänderung in der Drucklufteinrichtung das korrekte Anliegen des Werkstücks an der Anschlagfläche der Ausrichteinheit ermittelt werden.

Vorzugsweise sind an der Anschlagfläche der Ausrichteinheit mehrere Lauftaustritte ausgebildet, wodurch das vollständige Anliegen des Werkstücks an der Anschlagfläche bzw. das korrekte Ausrichten des Werkstücks an der Anschlagfläche sicher ermittelt werden kann. Vorteilhaft kann jedem Luftaustritt ein Drucksensor zugeordnet sein, um für jeden Lauftaustritt eine solche Staudrucküberwachung vorzusehen.

Eine vorteilhafte Weiterbildung der Zuführeinheit kann zudem vorsehen, dass der Werkstückauflage und/oder Ausrichteinheit eine Werkstückerfassung zugeordnet ist, insbesondere eine Kameraeinrichtung, Lasereinrichtung, Lidareinrichtung und/oder dergleichen, durch die eine Position des Werkstücks erfassbar ist, wobei der Manipulator in Abhängigkeit von einem Erfassungsergebnis der Werkstückerfassung steuerbar ist.

Bevorzugt kann die Werkstückerfassung oberhalb der Werkstückauflage und/oder der Ausrichteinheit angeordnet sein. Durch die Werkstückerfassung kann beispielsweise eine Kontur oder eine Oberseite des auf der Werkstückauflage aufliegenden Werkstücks erfassbar sein. Auf diese Weise kann eine Steuerung des Manipulators in der Weise vorgesehen sein, dass die Greifeinheit an einer beliebigen Stelle innerhalb der erfassten Kontur des Werkstücks ansetzbar ist. Die Greifeinheit kann demnach mit einer nur groben Orientierung innerhalb der erfassten Kontur des Werkstücks an einer Oberseite des Werkstücks ansetzen, wodurch ein einfaches und schnelles Handhaben des Werkstücks, d.h. Angreifen der Greifeinheit an dem Werkstück, realisiert sein kann. Ein exaktes Positionieren des Werkstücks auf der Werkstückauflage relativ zum Manipulator, damit das Werkstück durch die Greifeinheit des Manipulators gegriffen werden kann, kann dadurch entfallen. Durch die Werkstückerfassung kann zudem vorgesehen sein, dass diese Werkstückparameter, beispielsweise in Form eines an dem Werkstück vorgesehenen Barcodes oder QR-Codes, erfasst und diese zum Steuern des Manipulators an die Steuereinheit übermittelt. Ebenso kann durch die Werkstückerfassung erfasst werden, ob das auszurichtende Werkstück richtig orientiert an der Anschlagfläche der Ausrichteinheit anliegt.

In einer weiteren bevorzugten Ausgestaltung der Zuführeinheit kann vorgesehen sein, dass der Werkstückauflage eine Fördereinrichtung und/oder ein Werkstückpuffer zugeordnet ist, und der Manipulator eingerichtet ist, durch eine Stellbewegung das auf der Fördereinrichtung und/oder dem Werkstückpuffer aufliegende Werkstück zur Werkstückauflage zu überführen.

Bei der Fördereinrichtung kann es sich um eine Transporteinrichtung handeln, um beispielsweise das Werkstück von einem Stapelplatz oder einer Bearbeitungsmaschine zur Werkstückauflage zu transportieren. Ebenso kann die Fördereinrichtung als eine Werkstückrückführung ausgebildet sein, welche das Werkstück von einem Werkstückauslauf der Bearbeitungsmaschine und/oder einem Stapelplatz für Werkstücke zu der Werkstückauflage transportiert.

Bei der Stellbewegung des Manipulators, um das auf der Fördereinrichtung aufliegende Werkstück zur Werkstückauflage zu überführen, handelt es sich insbesondere um eine Verschiebebewegung, bei welcher das Werkstück durch den Manipulator ausschließlich in der X-Y-Ebene der Werkstückauflage bewegt wird. Ein Anheben des Werkstücks durch den Manipulator in der Z-Richtung ist dabei bevorzugt nicht vorgesehen, jedoch auch nicht ausgeschlossen. Liegt das Werkstück beispielsweise auf dem Werkstückpuffer auf, z.B. eine Palette mit Werkstücken, kann der Manipulator ebenso eingerichtet sein, dass Werkstück durch eine Hubbewegung auf die Werkstückauflage zu heben.

Ein besonders vorteilhafter Einsatzzweck der Zuführeinheit gemäß einer der zuvor beschriebenen Ausführungsformen ist gemäß einer Weiterbildung der Erfindung in einer Bearbeitungsmaschine zum Bearbeiten eines Werkstücks.

Eine erfindungsgemäße Bearbeitungsmaschine zum Bearbeiten eines Werkstücks, das bevorzugt zumindest abschnittsweise aus Holz, Holzwerkstoff, Kunststoff oder dergleichen besteht, umfasst eine Bearbeitungseinheit zum Bearbeiten des Werkstücks, eine Zuführeinheit zum Zuführen des Werkstücks zu einer Zuführeinrichtung der Bearbeitungsmaschine, und eine Steuereinheit zum Steuern der Bearbeitungseinheit, der Zuführeinrichtung und/oder der Zuführeinheit zum Zuführen des Werkstücks zu der Zuführeinrichtung, wobei die Zuführeinheit zum Zuführen des Werkstücks zu der Zuführeinrichtung gemäß einer der zuvor beschriebenen Ausführungsformen ausgebildet ist.

Die Bearbeitungsmaschine kann sowohl als eine stationäre Bearbeitungsmaschine als auch als eine Durchlaufmaschine ausgebildet sein. Die Bearbeitungsmaschine kann eine Transporteinrichtung aufweisen, durch welche das zu bearbeitende Werkstück relativ zur Bearbeitungseinheit bewegbar ist. Bei der Bearbeitungseinheit der Bearbeitungsmaschine kann es sich um eine Einheit zum Ausführen eines beliebigen Bearbeitungsvorgangs am Werkstück handeln. Insbesondere kann die Bearbeitungseinheit ausgebildet sein, um einen Fräsvorgang, Sägevorgang, Bohrvorgang, einen Druckvorgang, einen Vorgang zum Anbringen eines Kantenmaterials an dem Werkstück oder dergleichen auszuführen. Bevorzugt bildet die Bearbeitungseinheit ein Bearbeitungsaggregat der Bearbeitungsmaschine. Der Manipulator der Zuführeinheit ist bevorzugt mit einer Steuereinheit der Bearbeitungsmaschine gekoppelt. Vorteilhaft kann der Manipulator integral mit der Bearbeitungsmaschine ausgebildet sein. Beispielsweise kann der Manipulator als ein Aggregat der Bearbeitungsmaschine ausgebildet sein.

Ein Verfahren zum Zuführen eines Werkstücks zu einer Bearbeitungsmaschine ist in Anspruch 13 definiert und dient zur Realisierung der oben genannten Vorteile. Bei diesem ist besonders bevorzugt vorgesehen, dass ein auf einer Werkstückauflage, insbesondere einer Luftkisseneinrichtung, Kugelrolleneinrichtung, Rollenbahn oder Rollenleiste, aufliegendes Werkstück durch einen Manipulator gegriffen wird, das auf der Werkstückauflage aufliegende Werkstück zu einer Ausrichteinheit durch eine Stellbewegung des Manipulators bewegt wird, das Werkstück an der Ausrichteinheit ausgerichtet wird, indem das Werkstück durch eine zur Ausrichteinheit gerichteten Stellbewegung des Manipulators in Anlage an die Ausrichteinheit gebracht wird, und das Werkstück zu einer Zuführeinrichtung der Bearbeitungsmaschine zugeführt wird, indem das Werkstück durch eine Stellbewegung des Manipulators relativ zur Ausrichteinheit zur Zuführeinrichtung bewegt wird.

Eine vorteilhafte Weiterbildung des Verfahrens kann zudem vorsehen, dass durch eine Werkstückerfassung, insbesondere eine Kameraeinrichtung, Lasereinrichtung, Lidareinrichtung und/oder dergleichen, eine Position des Werkstücks erfasst wird, und der Manipulator in Abhängigkeit von einem Erfassungsergebnis der Werkstückerfassung in der Weise gesteuert wird, dass der Manipulator an wenigstens einer Werkstückfläche angreift und das Werkstück auf der Werkstückauflage aufliegend zur Ausrichteinheit bewegt.

In einer weiteren Ausgestaltung des Verfahrens kann das Werkstück durch den Manipulator mit einer definierten Andruckkraft an der Ausrichteinheit ausgerichtet werden, wobei die definierte Andruckkraft in Abhängigkeit von einer kraftgeregelten und/oder drehmomentgeregelten Bewegungssteuerung des Manipulators und/oder eines Erfassungsergebnisses einer Sensoreinrichtung der Ausrichteinheit, die eine Andruckkraft des Werkstücks an die Ausrichteinheit erfasst, und/oder eines Erfassungsergebnisses eines Drucksensors einer Drucklufteinrichtung, die wenigstens einen Luftaustritt an der Ausrichteinheit aufweist, gesteuert wird.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine schematische Draufsicht auf eine Ausführungsform einer offenbarungsgemäßen Bearbeitungsmaschine;
- Fig. 2: eine Detailansicht einer Zuführeinheit der Bearbeitungsmaschine in einer schematischen Draufsicht;
- Fig. 3: eine Draufsicht auf ein Werkstück während eines Ausrichtvorgangs an einer Ausrichteinheit der Zuführeinheit in Fig. 2 in drei Schritten;
- Fig. 4: eine schematisch perspektivische Ansicht einer Werkstückauflage mit einer exemplarischen Ausführungsform der Ausrichteinheit;
- Fig. 5: die Zuführeinheit gemäß einer exemplarischen Ausführungsform;
- Fig. 6: die Zuführeinheit gemäß einer weiteren exemplarischen Ausführungsform;
- Fig. 7: die Zuführeinheit gemäß einer weiteren exemplarischen Ausführungsform;
- Fig. 8: die Zuführeinheit gemäß einer weiteren exemplarischen Ausführungsform;
- Fig. 9: die Zuführeinheit gemäß einer weiteren exemplarischen Ausführungsform;

### Beschreibung von Ausführungsformen

Gleiche Bezugszeichen, die in verschiedenen Figuren aufgeführt sind, benennen identische, einander entsprechende, oder funktionell ähnliche Elemente.

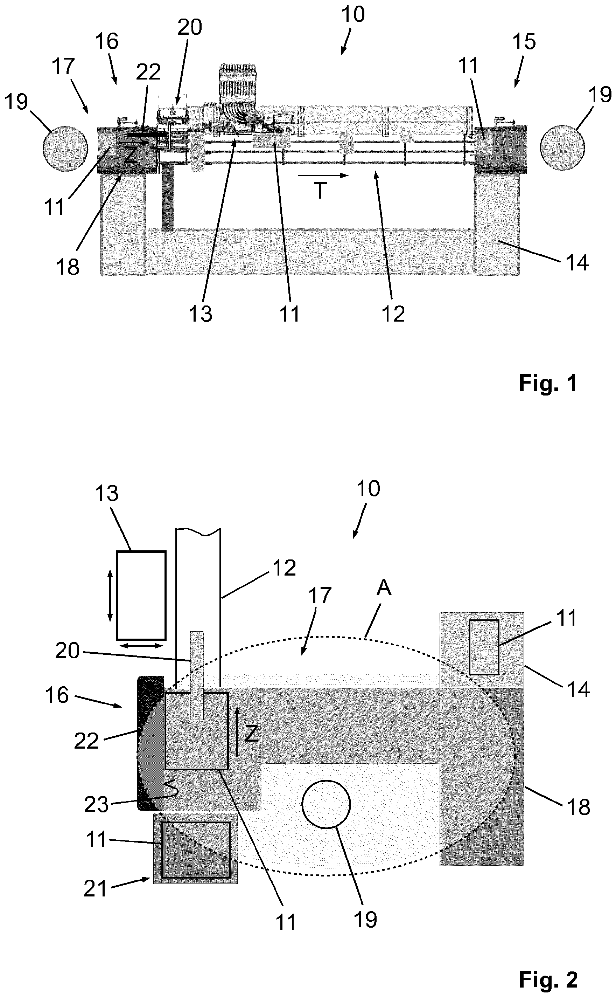

Fig. 1 zeigt eine Ausführungsform einer offenbarungsgemäßen Bearbeitungsmaschine 10 zum Bearbeiten von Werkstücken 11 in einer schematischen Draufsicht.

Die Bearbeitungsmaschine 10 umfasst eine Transporteinrichtung 12, die gemäß Fig. 1 als eine Durchlauffördereinrichtung ausgebildet ist, beispielsweise ein Förderband, eine Förderkette, ein Förderriemen oder dergleichen. Auf der Transporteinrichtung 12 sind die zu bearbeitenden Werkstücke 11 positioniert und werden in einer Transportrichtung T relativ zu einer Bearbeitungseinheit 13 oder zu mehreren Bearbeitungseinheiten der Bearbeitungsmaschine 10 bewegt. Das Werkstück 11 kann während eines Bearbeitungsvorgangs durch die Bearbeitungseinheit 13 in der Transportrichtung T bewegt werden.

In einer alternativen Ausführungsform der Bearbeitungsmaschine 10 kann ebenso vorgesehen sein, dass das Werkstück 11 stationär auf einer Auflageeinrichtung aufliegt und die Bearbeitungseinheit 13 durch eine Stelleinrichtung, relativ zu dem Werkstück 11 bewegt wird.

Ebenso sind Mischformen dieser beiden Konzepte möglich, wobei die Transporteinrichtung 12 die Aufgabe hat, eine Relativbewegung zwischen dem Werkstück 11 und der Bearbeitungseinheit 13 herbeizuführen.

Die Bearbeitungsmaschine 10 kann folglich sowohl als eine Durchlaufmaschine als auch als eine stationäre Bearbeitungsmaschine ausgebildet sein.

Bei den zu bearbeitenden Werkstücken 11 handelt es sich insbesondere um Werkstücke, die zumindest abschnittsweise aus Holz, Holzwerkstoff, Kunststoff oder dergleichen bestehen. Die Werkstücke 11 können plattenförmige Werkstücke sein. Bevorzugt kann es sich um unterschiedliche Werkstücke 11 handeln, beispielsweise um Massivholz- oder Spanplatten, Leichtbauplatten, Sandwichplatten, Profile oder dergleichen. Die vorliegende Erfindung ist jedoch nicht auf derartige Werkstücke 11 beschränkt.

Die Bearbeitungsmaschine 10 kann eine Fördereinrichtung 14 zum Fördern der Werkstücke 11 umfassen, die von einem Maschinenauslauf 15 zu einem Maschineneinlauf 16 verläuft. Die Fördereinrichtung 14 kann die Werkstücke 11 von dem Maschinenauslauf 15 oder von einem Werkstückpuffer oder einer anderen Zuführung, beispielsweise für eine manuelle Zuführung von Werkstücken 11 durch einen Maschinenbediener oder eine Zuführung von einer anderen Bearbeitungsmaschine, zum Maschineneinlauf 16 fördern.

Bei der Fördereinrichtung 14 kann es sich beispielsweise um ein Förderband, ein Förderriemen, eine Förderkette, eine Rollenbahn, eine Kugelrolleneinrichtung, eine Rollenleiste, eine Luftkisseneinrichtung oder dergleichen handeln.

Dem Maschineneinlauf 16 der Bearbeitungsmaschine 10 ist eine Zuführeinheit 17 zugeordnet. Die Zuführeinheit 17 kann sowohl eine separate Einheit bilden als auch eine integrale Einheit der Bearbeitungsmaschine 10 sein.

Die Zuführeinheit 17 ist zum Zuführen eines Werkstücks 11 zu der Bearbeitungseinheit 13 ausgebildet.

Die Zuführeinheit 17 umfasst eine Werkstückauflage 18, die vorzugsweise als Luftkisseneinrichtung, Kugelrolleneinrichtung, Rollenbahn oder Rollenleiste ausgebildet ist. Durch eine solche Werkstückauflage 18 kann eine nahezu reibungsfreie Bewegung des auf der Werkstückauflage 18 aufliegenden Werkstücks 11 vorgesehen sein.

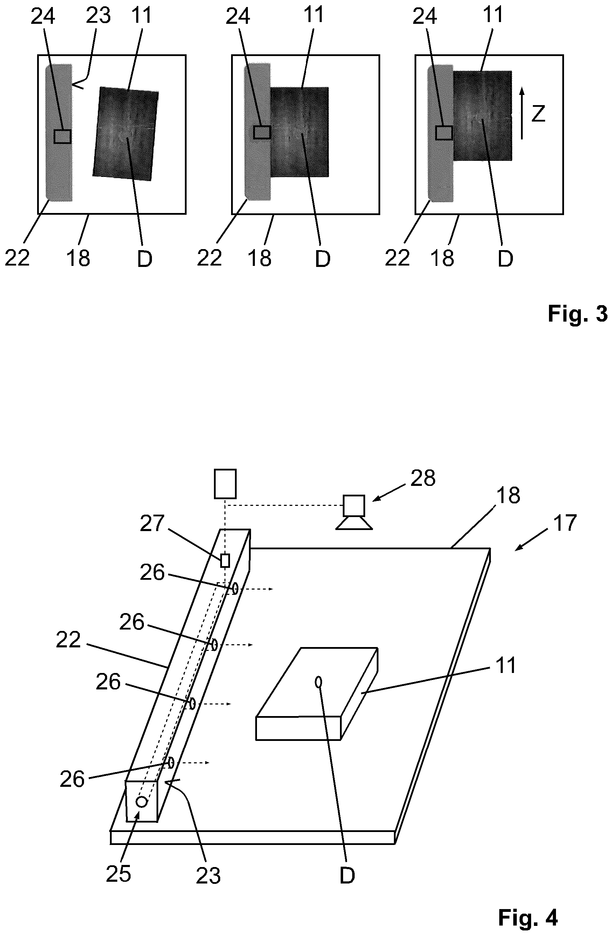

Die Werkstückauflage 18 ist insbesondere eingerichtet, eine freie Bewegung des darauf aufliegenden Werkstücks 11 zu gestatten. Dabei ist unter der freien Bewegung insbesondere zu verstehen, dass die Werkstückauflage 18 eine Bewegung des Werkstücks 11 in alle Richtungen in einer X-Y-Ebene der Werkstückauflage 18 gestattet. Zudem ist unter der freien Bewegung zu verstehen, dass die Werkstückauflage 18 eine Drehbewegung des auf der Werkstückauflage 18 aufliegenden Werkstücks 11 gestattet. Die Drehbewegung entspricht einer Rotation des Werkstücks 11 um eine beliebige eigene Drehachse D (siehe Fig. 3) senkrecht zur X-Y-Ebene der Werkstückauflage 18.

Die Zuführeinheit 17 umfasst zudem einen Manipulator 19, der eingerichtet ist, eine Stellbewegung auszuführen, um das auf der Werkstückauflage 18 aufliegende Werkstück 11 einer Zuführeinrichtung 20 der Bearbeitungsmaschine 10 zuzuführen. Der Manipulator 19 ist durch eine Steuereinheit der Bearbeitungsmaschine 10 steuerbar.

Der Manipulator 19 ist eine kinematische Einrichtung, die mehrere Bewegungsachsen und/oder mehrere Freiheitsgrade aufweist, um eine mehrachsige Stellbewegung zum Bewegen des Werkstücks 11 auf der Werkstückauflage 11 auszuführen.

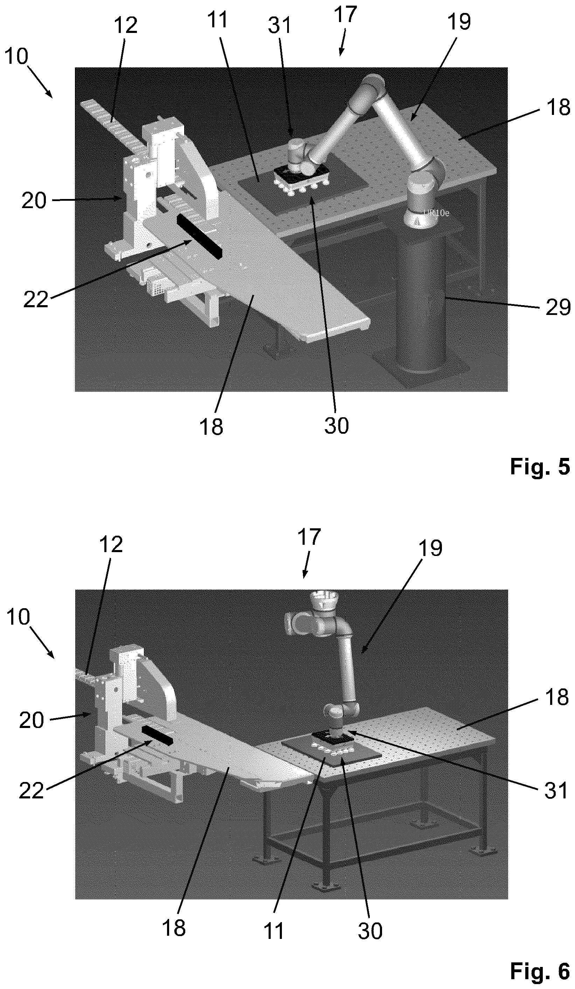

Insbesondere ist der Manipulator 19 als ein steuerbarer Roboter, besonders bevorzugt als eine Mensch-Roboter-Kollaborationseinrichtung, auch als Cobot bezeichnet, ausgebildet. Bevorzugt umfasst der Manipulator 19 wenigstens eine steuerbare Gelenkarmeinheit, beispielsweise einen Roboter-Arm und/oder Cobot-Arm, durch den die mehrachsige Stellbewegung zum Bewegen des Werkstücks 11 auf der Werkstückauflage 18 ausführbar ist. Nachfolgend wird auf beispielhafte Ausführungsformen des Manipulators 19 anhand der Fig. 5 bis 9 noch näher eingegangen.

Eine solche Mensch-Roboter-Kollaborationseinrichtung ist eingerichtet, einen Maschinenbediener bei der Handhabung des Werkstücks 11 zu unterstützen, insbesondere beim Bewegen des Werkstücks auf der Werkstückauflage 18 und/oder beim Zuführen des Werkstücks 11 zur Werkstückauflage 18.

Vorteilhaft kann die Mensch-Roboter-Kollaborationseinrichtung ausgebildet sein, mit dem Maschinenbediener zu interagieren. Hierzu kann vorgesehen sein, dass die Mensch-Roboter-Kollaborationseinrichtung mit dem Maschinenbediener, beispielsweise mit einer Hand oder einem Arm des Maschinenbedieners, koppelbar ist. Auf diese Weise kann die Handhabung des Werkstücks 11 kooperativ durch den Maschinenbediener und die Mensch-Roboter-Kollaborationseinrichtung gemeinsam folgen.

Gemäß der Ausführungsform der Bearbeitungsmaschine 10 in Fig. 1 kann ein solcher weiterer Manipulator 19 ebenso an dem Maschinenauslauf 15 der Bearbeitungsmaschine 10 vorgesehen sein, um die aus der Bearbeitungsmaschine 10 austretenden Werkstücke 11 handzuhaben.

Fig. 2 zeigt eine Detailansicht der Zuführeinheit 17 in einer schematischen Draufsicht. Die Draufsicht verdeutlicht einen Arbeitsbereich A des Manipulators 19 bezüglich der Werkstückauflage 18.

Die Werkstückauflage 18 kann in einer beliebigen Konfiguration zu dem Manipulator 19 ausgebildet sein, beispielsweise in einer U-förmigen Konfiguration, wie in Fig. 2 dargestellt, in einer L-förmigen Konfiguration oder in einer andersartigen Konfiguration.

Zudem kann ein Werkstückpuffer 21 im Arbeitsbereich A des Manipulators 19 angeordnet sein. Von diesem kann der Manipulator 19 Werkstücke 11 aufnehmen und auf der Werkstückauflage 18 ablegen, um diese darauffolgend auf der Werkstückauflage 18 aufliegend der Zuführeinrichtung 20 zuzuführen.

Innerhalb des Arbeitsbereichs A des Manipulators 19 kann der Manipulator 19 Werkstücke 11, die auf der Werkstückauflage 18 aufliegen oder in dem Werkstückpuffer 21 zwischengelagert sind oder durch die Fördereinrichtung 14 der Werkstückauflage 18 zugeführt werden, handhaben.

Der Manipulator 19 ist insbesondere eingerichtet, das in einer beliebigen Orientierung auf der Werkstückauflage 18 aufliegende Werkstück 11 durch die mehrachsige Stellbewegung in Richtung einer Ausrichteinheit 22 der Zuführeinheit 17 zu bewegen. Durch die Ausrichteinheit 22 wird das Werkstück 11 in eine definierte Orientierung zum Zuführen zur Bearbeitungsmaschine 10 ausgerichtet.

Hierbei wird das Werkstück 11 durch eine zur Ausrichteinheit 22 gerichtete Stellbewegung des Manipulators 19 an der Ausrichteinheit 22 ausgerichtet, indem das Werkstück 11 mit einer Schmalseite gegen eine Anschlagfläche 23 der Ausrichteinheit 22 bewegt wird.

Bei der Anschlagfläche 23 handelt es sich um ein Einlauflineal, an welchem das Werkstück 11 in einer definierten Richtung ausgerichtet werden kann, um für den nachfolgenden Bearbeitungsvorgang durch die Bearbeitungsmaschine 10 in der definierten Orientierung ausgerichtet zu sein.

Zum Ausrichten des Werkstücks 11 an der Ausrichteinheit 22 ist der Manipulator 19 eingerichtet, eine programmgesteuerte oder eine kraft- und/oder drehmomentgesteuerte Stellbewegung auszuführen. Hierzu kann der Manipulator 19 eine nicht näher dargestellte Sensoreinrichtung umfassen, durch die eine Kraft- und/oder Drehmomenteinwirkung auf den Manipulator 19 erfassbar ist. Die programmgesteuerte oder kraft- und/oder drehmomentgesteuerte Stellbewegung des Manipulators 19 kann in Abhängigkeit von einem Erfassungsergebnisses dieser Sensoreinrichtung durch die Steuereinheit steuerbar sein.

Auf diese Weise kann vorgesehen sein, dass das Werkstück 11 mit einer definierten Andruckkraft gegen die Ausrichteinheit 22 bewegbar ist, um ein korrektes Ausrichten des Werkstücks 11 sicherzustellen und Beschädigungen am Werkstück 11 zu vermeiden.

Zum Ausrichten des Werkstücks 11 an der Ausrichteinheit 22 weist der Manipulator 19 eine Dreheinrichtung 31 auf, durch die eine Verdrehung zwischen einer später zu beschreibenden Greifeinheit 30 des Manipulators 19 zum Greifen des Werkstücks 11 relativ zum Manipulator 19 gestattet ist. Diese Dreheinrichtung 31 ermöglicht eine Verdrehung des Werkstücks 11, wenn dieses zum Ausrichten durch den Manipulator 19 gegen die Ausrichteinheit 22 gedrückt wird.

Vorzugsweise gestattet die Dreheinrichtung 31 eine Verdrehung der Greifeinheit 30 in einem begrenzten Winkelbereich relativ zum Manipulator 19. Bevorzugt kann die Dreheinrichtung die Verdrehung der Greifeinheit 30 relativ zum Manipulator 19 in einem Winkelbereich von 180° oder weniger, bevorzugt 135° oder weniger, besonders bevorzugt 90° oder weniger, gestatten.

Die Darstellung in Fig. 3 verdeutlicht den Ausrichtvorgang des Werkstücks 11 in drei Schritten, wobei die linke Darstellung das Werkstück 11 in der nichtorientierten Ausrichtung auf der Werkstückauflage 18 zeigt, die mittlere Darstellung das an der Ausrichteinheit 22 ausgerichtete Werkstück 11, und die rechte Darstellung das Werkstück 11 in der orientierten Ausrichtung, in welcher das Werkstück 11 in der Ausrichtrichtung Z der Bearbeitungsmaschine 10 zugeführt wird.

In Fig. 3 verdeutlicht der am Werkstück 11 dargestellte Punkt die Drehachse D der Dreheinrichtung 31, um welche sich das Werkstück 11 zum Ausrichten an der Ausrichteinheit 22 durch die Stellbewegung des Manipulators 19 verdreht.

Die Ausrichteinheit 22 umfasst zudem eine Sensoreinrichtung 24, durch die eine Andruckkraft des Werkstücks 11 an die Anschlagfläche 23 der Ausrichteinheit 22 erfasst wird. Bei der Sensoreinrichtung 24 handelt es sich bevorzugt um einen oder mehrere Kraftsensoren zum Erfassen der Andruckkraft des Werkstücks 11 an die Anschlagfläche 23 der Ausrichteinheit 22. Bevorzugt sind der eine oder die mehreren Kraftsensoren in die Anschlagfläche 23 der Ausrichteinheit 22 integriert.

Insbesondere ist die Stellbewegung des Manipulators 19 zum Ausrichten des Werkstücks 11 an der Ausrichteinheit 22 in Abhängigkeit von dem Erfassungsergebnis der Sensoreinrichtung 24 steuerbar. Auf diese Weise kann der Manipulator 19 in Abhängigkeit von einem Erfassungsergebnis der Sensoreinrichtung 24 kraftgeregelt gesteuert werden, um das Werkstück 11 korrekt an der Ausrichteinheit 22 auszurichten.

Fig. 4 zeigt eine Weiterbildung der Ausrichteinheit 22, bei der diese eine Drucklufteinrichtung 25 aufweist, um ein korrektes Ausrichten des Werkstücks 11 an der Anschlagfläche 23 der Ausrichteinheit 22 zu erfassen.

Die Drucklufteinrichtung 25 umfasst an der Anschlagfläche 23 der Ausrichteinheit 22 mehrere Luftaustritte 26. Der Drucklufteinrichtung 25 wird Druckluft zugeführt, die über die Luftaustritte 26 in die Umgebung abgegeben wird. Liegt das Werkstück 11 mit einer Schmalseite flächig an der Anschlagfläche 23 der Ausrichteinheit 22 an, d.h. das Werkstück 11 liegt korrekt ausgerichtet an der Ausrichteinheit 22 an, werden die Luftaustritte 26 verschlossen und die Druckluft kann nicht mehr über die Luftaustritte 26 in die Umgebung entweichen. Dadurch tritt ein Druckanstieg in der Drucklufteinrichtung 25 auf, der durch einen Drucksensor 27 erfassbar ist. Um das Werkstück 11 korrekt an der Ausrichteinheit 22 auszurichten ist der Manipulator 19 in Abhängigkeit von dem Erfassungsergebnis dieses Drucksensors 27 steuerbar.

Der Werkstückauflage 18 und/oder der Ausrichteinheit 22 kann ergänzend oder alternativ eine Werkstückerfassung 28 zugeordnet sein. Diese kann beispielsweise oberhalb der Werkstückauflage 18 und/oder der Ausrichteinheit 22 installiert sein und eine Position des Werkstücks 11 erfassen. Ebenso kann die Werkstückerfassung 28 an dem Manipulator 19 angeordnet sein.

Bei der Werkstückerfassung 28 handelt es sich insbesondere um eine Kameraeinrichtung, eine Lasereinrichtung und/oder eine Lidareinrichtung, durch welche eine Position des Werkstücks 11 erfasst werden kann. Beispielsweise kann die Werkstückerfassung 28 eingerichtet sein, um eine Kontur des auf der Werkstückauflage 18 aufliegenden Werkstücks 11 zu erfassen.

Der Manipulator 19 ist in Abhängigkeit von einem Erfassungsergebnis der Werkstückerfassung 28 steuerbar. Dabei kann bevorzugt vorgesehen sein, dass der Manipulator 19 in der Weise gesteuert wird, dass dieser innerhalb der erfassten Werkstückkontur an einer Fläche des Werkstücks 11, insbesondere der Oberseite des Werkstücks 11, in einer ungefähren Position angreift. Auf diese Weise ist erreicht, dass der Manipulator 19 an das in einer beliebigen Orientierung auf der Werkstückauflage 18 aufliegende Werkstück 11 angreifen kann, um dieses zu der Ausrichteinheit 22 zu bewegen.

Nach dem Ausrichten des Werkstücks 11 an der Ausrichteinheit 22 ist der Manipulator 19 eingerichtet, das Werkstück 11 in einer Ausrichtrichtung Z relativ zur Ausrichteinheit 22 zu bewegen, um dieses der Zuführeinrichtung 20 der Bearbeitungsmaschine 10 zuzuführen, wie dies in den Fig. 1 und 2 dargestellt ist.

Die Zuführeinrichtung 20 ist bevorzugt als Klemmeinrichtung ausgebildet, insbesondere als ein Oberdruck- und/oder Unterdruckriemen, durch welche das Werkstück 11 zum Zuführen zu der Transporteinrichtung 12 der Bearbeitungsmaschine 10 und/oder während eines Transports durch die Transporteinrichtung 12 fixiert ist.

Durch die Stellbewegung des Manipulators 19 in die Ausrichtrichtung Z wird das Werkstück 11 folglich in der definierten Ausrichtung an die Zuführeinrichtung 20 übergeben, wobei eine Geschwindigkeit der Stellbewegung des Manipulators 19 und eine Geschwindigkeit der Transportbewegung der Zuführeinrichtung 20 hierzu miteinander synchronisiert sind.

Der Verfahrensablauf zum Zuführen des Werkstücks 11 zu der Zuführeinrichtung 20 der Bearbeitungsmaschine 10 kann in folgender Weise vorgesehen sein: Erfassen des Werkstücks 11 durch die Erfassungseinrichtung 28 und Ermitteln einer Position und/oder Werkstückparameter des Werkstücks 11. Ansteuern des Manipulators 19 und Angreifen der Greifeinheit 30 an dem Werkstück 11, bevorzugt in einer beliebigen Position an der Oberseite des Werkstücks 11 innerhalb der erfassten Werkstückkontur. Bewegen des Werkstücks 11 zu der Ausrichteinheit 22, indem das Werkstück 11 durch den Manipulator 19 über die Werkstückauflage 18 verschoben wird. Freischalten einer Drehachse der Dreheinrichtung 31, sodass die Drehbewegung des Werkstücks 11 durch das Anlegen an der Anschlagfläche 23 der Ausrichteinheit 22 ermöglicht ist.

Ermitteln eines korrekten Anliegens des Werkstücks 11 an der Anschlagfläche 23 durch die Sensoreinrichtung 24, den Drucksensor 27 der Drucklufteinrichtung 25 und/oder die Werkstückerfassung 28. Feststellen der Drehachse der Dreheinrichtung 31 und Zuführen des Werkstücks 11 in der Zuführrichtung Z zur Zuführeinrichtung 20. Freigeben des Werkstücks 11 durch die Greifeinheit 30 und Übergeben des Werkstücks 11 an die Zuführeinrichtung 20.

In den Fig. 5 bis 9 sind exemplarische Ausführungsformen der Zuführeinheit 17 dargestellt. Wie zuvor bereits beschrieben, kann der Manipulator 19 an beliebigen Positionen zur Werkstückauflage 18 angeordnet sein. Dabei kann der Manipulator 19 entweder als separate Einheit zur Werkstückauflage 18 angeordnet sein oder an der Bearbeitungsmaschine 10, der Werkstückauflage 18 oder einer anderen Einrichtung angebracht sein oder integral mit einer dieser ausgebildet sein.

Fig. 5 zeigt eine erste Ausführungsform der Zuführeinheit 17, bei welcher der Manipulator 19 benachbart zur Werkstückauflage 18 angeordnet ist. Hierbei kann der Manipulator 19 an einem Portal 29 oder beispielsweise auch an einer Konsole oder einer Traverse angebracht sein.

Bei dieser Ausführungsform bildet der Manipulator 19 eine eigenständige Einheit, die jedoch mit der Steuereinheit der Bearbeitungsmaschine 10 gekoppelt sein kann. Auf diese Weise kann die Steuerung des Manipulators 19 durch die Maschinensteuerung erfolgen.

Wie zuvor bereits beschrieben, ist der Manipulator 19 in Form eines steuerbaren Gelenkarms mit mehreren Gelenkachsen und/oder Freiheitsgraden ausgebildet. Insbesondere ist der Manipulator 19 als ein Roboter-Arm oder Cobot-Arm ausgebildet.

An einem Ende des Manipulators 19 ist die Greifeinheit 30 vorgesehen, die zum Angreifen an einer Fläche des Werkstücks 11 ausgebildet ist. Bevorzugt ist die Greifeinheit 30 als eine Vakuum-Greifeinheit, auch als Vakuum-Traverse bezeichnet, ausgebildet, wie dies in den Fig. 5 bis 9 dargestellt ist.

Alternativ kann die Greifeinheit 30 auch als eine Haftreibungs-Greifeinheit zum Angreifen an der Oberseite des Werkstücks 11 ausgebildet sein. Bei einer solchen Ausführungsform wird das Werkstück 11 durch die Haftreibung zwischen der Greifeinheit 30 und der Oberseite des Werkstücks 11, beispielsweise aufgrund eines gummierten Haftreibungselements an der Haftreibungs-Greifeinheit, auf der Werkstückauflage 18 aufliegend bewegt.

Zwischen der Greifeinheit 30 und dem Roboter-Arm oder Cobot-Arm ist die Dreheinrichtung 31 vorgesehen, um die Drehbewegung des auf der Werkstückauflage 18 aufliegenden Werkstücks 11 relativ zu dem Manipulator 19 zu gestatten. Die Dreheinrichtung 31 kann ein einfaches Drehgelenk mit einem rotatorischen Freiheitsgrad bilden.

Bei der Ausführungsform der Zuführeinheit 17 gemäß Fig. 5 ist die Werkstückauflage 18 L-förmig um den Manipulator 19 ausgebildet.

Fig. 6 zeigt eine weitere Ausführungsform der Zuführeinheit 17, bei welcher der Manipulator 19 oberhalb zur Werkstückauflage 18 angeordnet ist. Hierbei kann der Manipulator 19 beispielsweise an einer Traverse, einer Decke einer Maschinenhalle oder einer anderen geeigneten Einrichtung angebracht sein.

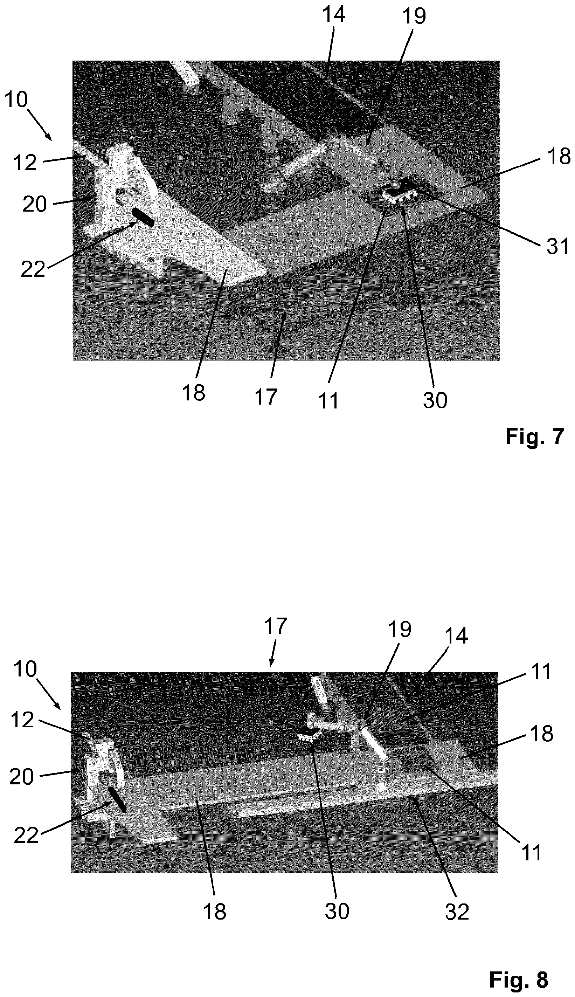

Fig. 7 zeigt eine weitere Ausführungsform der Zuführeinheit 17, bei welcher der Manipulator 19 benachbart zur Werkstückauflage 18 angeordnet ist, wobei die Werkstückauflage 18 U-förmig um den Manipulator 19 herum ausgebildet ist. Zudem ist bei dieser Ausführungsform die Fördereinrichtung 14 vorgesehen, durch welche die Werkstücke 11 vom Maschinenauslauf 15, vom Werkstückpuffer 21 oder von der anderen Zuführung zur Werkstückauflage 18 gefördert werden.

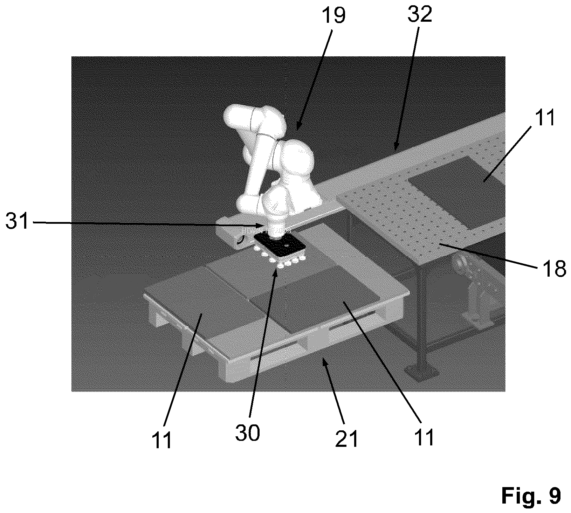

Die Fig. 8 und 9 zeigen weitere Ausführungsformen der Zuführeinheit 17, bei welcher der Manipulator 19 an einer Stelleinrichtung 32 angeordnet ist. Eine solche Stelleinrichtung 32 kann eine Stellbewegung des Manipulators 19 in einer X-Richtung und/oder Y-Richtung relativ zur Werkstückauflage 18 steuern.

Dabei verdeutlicht Fig. 9, dass der mit der Greifeinheit 30, insbesondere Vakuum-Greifeinheit, ausgebildete Manipulator 19 ebenso ausgebildet sein, Werkstücke 11 von dem Werkstückpuffer 21 aufnehmen zu können, um diese durch eine Hubbewegung auf die Werkstückauflage 18 zu heben.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Zuführeinheit (17) zum Zuführen eines Werkstücks (11), das bevorzugt zumindest abschnittsweise aus Holz, Holzwerkstoff, Kunststoff oder dergleichen besteht, zu einer Bearbeitungsmaschine (10), umfassend:
eine Werkstückauflage (18), insbesondere eine Luftkisseneinrichtung, Kugelrolleneinrichtung, Rollenbahn oder Rollenleiste, die eingerichtet ist, eine Bewegung eines darauf aufliegenden Werkstücks (11) zu gestatten, und
wenigstens einen Manipulator (19), der eingerichtet ist, durch eine Stellbewegung das auf der Werkstückauflage (18) aufliegende Werkstück (11) einer Zuführeinrichtung (20) der Bearbeitungsmaschine (10) zuzuführen.

2. Zuführeinheit nach Anspruch 1, bei der ferner durch den wenigstens einen Manipulator (19) eine mehrachsige Stellbewegung ausführbar ist und bevorzugt das Werkstück (11) durch den Manipulator (19) auf der Werkstückauflage (18) aufliegend frei bewegbar ist.

3. Zuführeinheit nach Anspruch 1 oder 2, bei der ferner der wenigstens eine Manipulator (19) eine Greifeinheit (30) zum Angreifen an dem Werkstück (11) aufweist, insbesondere eine Vakuum-Greifeinheit und/oder Haftreibungs-Greifeinheit zum Angreifen an wenigstens einer Werkstückfläche, bevorzugt Oberseite, des Werkstücks (11).

4. Zuführeinheit nach einem der vorhergehenden Ansprüche, bei der ferner der Werkstückauflage (18) eine Ausrichteinheit (22) zugeordnet ist, und der Manipulator (19) eingerichtet ist, das Werkstück (11) durch eine zur Ausrichteinheit (22) gerichteten Stellbewegung an der Ausrichteinheit (22) auszurichten.

5. Zuführeinheit nach Anspruch 4, bei der ferner der Manipulator (19) eine Dreheinrichtung (31) aufweist, durch die eine Verdrehung zumindest der Greifeinheit (30) relativ zum Manipulator (19) gestattet ist und mittels welcher das Werkstück (11) durch eine Verdrehung an der Ausrichteinheit (22) ausrichtbar ist.

6. Zuführeinheit nach einem der vorhergehenden Ansprüche, bei der ferner der Manipulator (19) eingerichtet ist, das Werkstück (11) in einer Ausrichtrichtung (Z) relativ zur Ausrichteinheit (22) zu bewegen und der Zuführeinrichtung (20) der Bearbeitungsmaschine (10) zuzuführen.

7. Zuführeinheit nach einem der vorhergehenden Ansprüche, bei der ferner der Manipulator (19) eine kraftgeregelte und/oder drehmomentgeregelte Bewegungssteuerung aufweist, durch die das Werkstück (11) mit einer definierten Andruckkraft an der Ausrichteinheit (22) ausrichtbar ist.

8. Zuführeinheit nach einem der vorhergehenden Ansprüche, bei der ferner die Ausrichteinheit (22) eine Sensoreinrichtung (24) aufweist, durch die eine Andruckkraft des Werkstücks (11) an die Ausrichteinheit (22) erfassbar ist, wobei der Manipulator (19) in Abhängigkeit von einem Erfassungsergebnis der Sensoreinrichtung (24) steuerbar ist.

9. Zuführeinheit nach einem der vorhergehenden Ansprüche, bei der ferner die Ausrichteinheit (22) eine Drucklufteinrichtung (25) mit wenigstens einem Luftaustritt (26) an der Ausrichteinheit (22) aufweist, wobei die Drucklufteinrichtung (25) zumindest einen Drucksensor (27) umfasst und der Manipulator (19) in Abhängigkeit von einem Erfassungsergebnis des Drucksensors (27) steuerbar ist.

10. Zuführeinheit nach einem der vorhergehenden Ansprüche, bei der ferner der Werkstückauflage (18) und/oder Ausrichteinheit (22) eine Werkstückerfassung (28) zugeordnet ist, insbesondere eine Kameraeinrichtung, Lasereinrichtung, Lidareinrichtung und/oder dergleichen, durch die eine Position des Werkstücks (11) erfassbar ist, wobei der Manipulator (19) in Abhängigkeit von einem Erfassungsergebnis der Werkstückerfassung (28) steuerbar ist.

11. Zuführeinheit nach einem der vorhergehenden Ansprüche, bei der ferner der Werkstückauflage (18) eine Fördereinrichtung (14) und/oder ein Werkstückpuffer (21) zugeordnet ist, und der Manipulator (19) eingerichtet ist, durch eine Stellbewegung das auf der Fördereinrichtung (14) und/oder dem Werkstückpuffer (21) aufliegende Werkstück (11) zur Werkstückauflage (18) zu überführen.

12. Bearbeitungsmaschine (10) zum Bearbeiten eines Werkstücks (11), das bevorzugt zumindest abschnittsweise aus Holz, Holzwerkstoff, Kunststoff oder dergleichen besteht, umfassend:
eine Bearbeitungseinheit (13) zum Bearbeiten des Werkstücks (11),
eine Zuführeinheit (17) zum Zuführen des Werkstücks (11) zu einer Zuführeinrichtung (20) der Bearbeitungsmaschine (10), und
eine Steuereinheit zum Steuern der Bearbeitungseinheit (13), der Zuführeinrichtung (20) und/oder der Zuführeinheit (17) zum Zuführen des Werkstücks (11) zu der Zuführeinrichtung (20), **dadurch gekennzeichnet, dass**
die Zuführeinheit (17) zum Zuführen des Werkstücks (11) zu der Zuführeinrichtung (20) nach einem der vorhergehenden Ansprüche ausgebildet ist.

13. Verfahren zum Zuführen eines Werkstücks (11), das bevorzugt zumindest abschnittsweise aus Holz, Holzwerkstoff, Kunststoff oder dergleichen besteht, zu einer Bearbeitungsmaschine (10), insbesondere mit einer Zuführeinheit (17) nach einem der Ansprüche 1 bis 11, aufweisend die Schritte:
Greifen eines auf einer Werkstückauflage (18), insbesondere einer Luftkisseneinrichtung, Kugelrolleneinrichtung, Rollenbahn oder Rollenleiste, aufliegenden Werkstücks (11) durch einen Manipulator (19),
Bewegen des auf der Werkstückauflage (18) aufliegenden Werkstücks (11) zu einer Ausrichteinheit (22) durch eine Stellbewegung des Manipulators (19), Ausrichten des Werkstücks (11) an der Ausrichteinheit (22), indem das Werkstück (11) durch eine zur Ausrichteinheit (22) gerichteten Stellbewegung des Manipulators (19) in Anlage an die Ausrichteinheit (22) gebracht wird, und
Zuführen des Werkstücks (11) zu einer Zuführeinrichtung (20) der Bearbeitungsmaschine (10), indem das Werkstück (11) durch eine Stellbewegung des Manipulators (19) relativ zur Ausrichteinheit (22) zur Zuführeinrichtung (20) bewegt wird.

14. Verfahren nach Anspruch 13, bei dem ferner durch eine Werkstückerfassung (28), insbesondere eine Kameraeinrichtung, Lasereinrichtung, Lidareinrichtung und/oder dergleichen, eine Position des Werkstücks (11) erfasst wird, und der Manipulator (19) in Abhängigkeit von einem Erfassungsergebnis der Werkstückerfassung (28) in der Weise gesteuert wird, dass der Manipulator (19) an wenigstens einer Werkstückfläche angreift und das Werkstück (11) auf der Werkstückauflage (18) aufliegend zur Ausrichteinheit (22) bewegt.

15. Verfahren nach Anspruch 13 oder 14, bei dem ferner das Werkstück (11) durch den Manipulator (19) mit einer definierten Andruckkraft an der Ausrichteinheit (22) ausgerichtet wird, wobei die definierte Andruckkraft in Abhängigkeit von einer kraftgeregelten und/oder drehmomentgeregelten Bewegungssteuerung des Manipulators (19) und/oder eines Erfassungsergebnisses einer Sensoreinrichtung (24) der Ausrichteinheit (22), die eine Andruckkraft des Werkstücks (11) an die Ausrichteinheit (22) erfasst, und/oder eines Erfassungsergebnisses eines Drucksensors (27) einer Drucklufteinrichtung (25), die wenigstens einen Luftaustritt (26) an der Ausrichteinheit (22) aufweist, gesteuert wird.
